# EUROPEAN PATENT APPLICATION

(11) **EP 2 389 033 A1**
(43) Date of publication of application: **23.11.2011**
(21) Application number: 10841791.6
(22) Date of filing: 30.11.2010
(51) Int. Cl.: H04W 36/06

(54) **SECTOR HANDOVER SYSTEM FOR RADIO FREQUENCY SIGNALS IN MOBILE COMMUNICATION BASE STATION**

(30) Priority: 05.03.2010 CN 201020147293 U; 05.03.2010 CN 201010142692
(71) Applicant: WUXI BOOU ELECTRONIC TECHNOLOGICAL LTD., Yixing, Jiangsu 214200 (CN)
(72) Inventor: HU, Gang, Shenzhen Guangdong 518053 (CN); YUAN, Xie, Shenzhen Guangdong 518053 (CN); GUO, Xiaohong, Shenzhen Guangdong 518053 (CN); LIU, Qingjian, Shenzhen Guangdong 518053 (CN)
(74) Representative: Vandeberg, Marie-Paule L.G.
(86) International application number: PCT/CN2010/079280
(87) International publication number: WO 2011/106982

(57) **Abstract**

A mobile communication base station (BS) radio frequency (RF) signal sector switching system is provided. The system is disposed between BS RF interfaces of a wireless communication BS and BS antennas, and includes BS end interfaces connected to the three BS RF interfaces in the wireless communication BS, antenna end interfaces connected to the three BS antennas, and a switching circuit between the BS end interfaces and the antenna end interfaces, enabling any BS end interface to be electrically connected to one, two, or three antenna end interfaces at the same time, and enabling any antenna end interface to be electrically connected to one, two, or three BS end interfaces at the same time. With original BS antenna configurations unchanged, the mobile communication BS RF signal sector switching system can increase a channel utilization rate of an idle sector, reduce cases of channel congestion of a sector of heavy traffic, and has advantages of energy conservation and environmental protection.

## Description

### Field of the Invention

The present invention relates to a mobile communication base station (BS) radio frequency (RF) signal sector switching system in the field of wireless communications technologies.

### Related Art

An RF is an abbreviation of a high-frequency alternating electromagnetic wave. An alternating current alternating less than 1,000 times per second is called a low-frequency current, and an alternating current alternating more than 1,000 times per second is called a high-frequency current. An RF current is a high-frequency current. According to electronics theories, when a current passes through a conductor, a magnetic field is formed around the conductor. When an alternating current passes through a conductor, an alternating electromagnetic field is formed around the conductor, which is called an electromagnetic wave. When a frequency of an electromagnetic wave is lower than 100 kilohertzs (khz), the electromagnetic wave is absorbed by the ground, and cannot achieve effective transmission. But when a frequency of an electromagnetic wave is higher than 100 khz, the electromagnetic wave can be transmitted in air, and achieves long-distance transmission capability after being reflected by the ionosphere on the outer edge of the atmosphere. A high-frequency electromagnetic wave having long-distance transmission capability is called an RF.

An antenna feeder system is a combined name of an antenna system and a feeder system. Being an indispensable part of wireless communication, an antenna has a fundamental function of transmitting and receiving radio waves. During transmitting, a high-frequency current is converted into an electromagnetic wave; during receiving, an electromagnetic wave is converted into a high-frequency current. A feeder connects equipment to the antenna.

A power splitter is a device to split one-way input signal energy into two or multiple ways of output energies being the same or different. The common power splitters are divided into two-way, three-way, and four-way. Reversely, the device may combine multiple ways of signal energies into a one-way output, and the device is called a combiner in this case.

A BS is also called a wireless base station/base station, and is a set of equipment for serving a wireless cell (normally an omnidirectional cell or a three-sector cell).

In an existing mobile communication BS RF signal sector coverage system, RF cables are used to connect BS RF interfaces to BS antennas one by one respectively. In this way, the number of users in each BS antenna coverage area may change, so that the number of clients in some coverage area may be usually very small, and a carrier frequency resource becomes idle; however, the number of users in some coverage area is very large, and a carrier frequency resource is fully loaded or overloaded. Therefore, in practice, a carrier frequency resource is redundantly configured, which greatly wastes the carrier frequency resource in a BS system, and the wasting inevitably exists due to the current universal one-to-one antenna-feeder connection technology.

### SUMMARY OF THE INVENTION

Regarding a defect in the prior art that BS RF interfaces correspond to BS antennas in a one-to-one manner, and the BS RF interfaces or the BS antennas cannot cooperate with each other, a mobile communication BS RF signal sector switching system (called a switching system below for short) is designed. After the switching system is applied, by internal switching in the switching system, BS RF interfaces 1, 2, and 3 can be connected to BS antennas 1, 2, and 3 in any form, BS RF interfaces 4, 5, and 6 can be connected to BS antennas 4, 5, and 6 in any form, and so on. Three BS RF interfaces in a wireless communication BS and three BS antennas corresponding to the three BS RF interfaces form a switching unit, and in the switching unit, any BS RF interface can be connected to any BS antenna in any form. For example, the BS RF interface 1, 2, or 3 can transmit and receive signals through any one, two, or three BS antennas of the BS antennas 1, 2, and 3, and the BS RF interface 4, 5, or 6 can transmit and receive signals through any one, two, or three BS antennas of the BS antennas 4, 5, and 6.

A mobile communication BS RF signal sector switching system is provided. The switching system is disposed between BS RF interfaces of a wireless communication BS and BS antennas, the switching system includes BS end interfaces connected to the three BS RF interfaces in the wireless communication BS, antenna end interfaces connected to the three BS antennas, and a switching circuit between the BS end interfaces and the antenna end interfaces, enabling any BS end interface to be electrically connected to one, two, or three antenna end interfaces at the same time, and enabling any antenna end interface to be electrically connected to one, two, or three BS end interfaces at the same time.

In the mobile communication BS RF signal sector switching system, the switching circuit of the switching system includes RF switches and three-way power splitters/combiners.

In the mobile communication BS RF signal sector switching system, the switching circuit of the switching system includes seven single-pole triple-throw (SPTT) RF switches, six single-pole double-throw (SPDT) RF switches, and four three-way power splitters/combiners, and carrier frequency distribution in the wireless communication BS is controlled through the RF switches.

For convenience of description, the three SPTT RF switches connected to antenna end interfaces 1, 2, and 3 are named as switches A'1, A'2, and A'3 in sequence. The three SPTT RF switches connected to BS end interfaces 1, 2, and 3 are named as switches A1, A2, and A3 in sequence. Each of the switches A'1, A'2, and A'3 on an antenna end interface side is connected to two SPDT RF switches, and the SPDT RF switches are named as switches C1, C2, C3, C4, C5, and C6 in sequence. Each of the switches A1, A2, and A3 is connected to one three-way power splitter/combiner, and the three-way power splitters/combiners are named as three-way power splitters/combiners B1, B2, and B3 in sequence. A three-way power splitter/combiner in the center of the switching circuit is named as a three-way power splitter/combiner B4, and an SPTT RF switch also in the center of the switching circuit is named as a switch A4.

Likewise, three static contact ends of the SPTT RF switches A1, A2, A3, and A4 are named as A11, A12, A13; A21, A22, A23; A31, A32, A33; and A41, A42, A43 in sequence in a downward direction. Three static contact ends of the SPTT RF switches A'1, A'2, and A'3 are named as A'11, A'12, A'13; A'21, A'22, A'23; and A'31, A'32, A'33 in sequence in a downward direction. Two static contact ends of the SPDT RF switches C1, C2, C3, C4, C5, and C6 are named as C11, C12; C21, C22; C31, C32; C41, C42; C51, C52; and C61, C62 in sequence in a downward direction. Three non-common ports of the three-way power splitters/combiners B1, B2, B3, and B4 are named as B11, B12, B13; B21, B22, B23; B31, B32, B33; and B41, B42, B43 in sequence in a downward direction.

In the mobile communication BS RF signal sector switching system, the switching circuit of the switching system includes seven SPTT RF switches, six SPDT RF switches, and four three-way power splitters/combiners, carrier frequency distribution in the wireless communication BS is controlled through the RF switches, and circuit connections are as follows.
1) Dynamic contact levers of the SPTT RF switches A'1, A'2, and A'3 are connected to the antenna end interfaces 1, 2, and 3 respectively.
2) Dynamic contact levers of the SPTT RF switches A1, A2, and A3 are connected to the BS end interfaces 1, 2, and 3 respectively.
3) A dynamic contact lever of the SPDT RF switch C1 is connected to a static contact end of the SPTT RF switch A'1, and a dynamic contact lever of the SPDT RF switch C2 is connected to a static contact end of the SPTT RF switch A'1; likewise, a dynamic contact lever of the SPDT RF switch C3 is connected to a static contact end of the SPTT RF switch A'2, and a dynamic contact lever of the SPDT RF switch C4 is connected to a static contact end of the SPTT RF switch A'2; and a dynamic contact lever of the SPDT RF switch C5 is connected to a static contact end of the SPTT RF switch A'3, and a dynamic contact lever of the SPDT RF switch C6 is connected to a static contact end of the SPTT RF switch A'3.
4) Three static contact ends of the SPTT RF switch A4 are connected to static contact ends of the SPTT RF switches A'1, A'2, and A'3 respectively; and a dynamic contact lever of the SPTT RF switch A4 is connected to a common port of the three-way power splitter/combiner B4.
5) Three non-common ports of the three-way power splitter/combiner B4 are connected to static contact ends of the SPTT RF switches A1, A2, and A3 respectively.
6) Another static contact ends of the SPTT RF switches A1, A2, and A3 are connected to common ports of three-way power splitters/combiners B1, B2, and B3 respectively.
7) The last static contact end of the SPTT RF switch A1 is connected to a static contact end of the SPDT RF switch C1 or the SPDT RF switch C2; likewise, the last static contact end of the SPTT RF switch A2 is connected to a static contact end of the SPDT RF switch C3 or the SPDT RF switch C4; and the last static contact end of the SPTT RF switch A3 is connected to a static contact end of the SPDT RF switch C5 or the SPDT RF switch C6.
8) Three non-common ports of the three-way power splitter/combiner B1 are connected to a static contact end of the SPDT RF switch C1 or C2, a static contact end of the switch C3 or C4, and a static contact end of the switch C5 or C6 respectively; likewise, three non-common ports of the three-way power splitter/combiner B2 are connected to a static contact end of the SPDT RF switch C1 or C2, a static contact end of the switch C3 or C4, and a static contact end of the switch C5 or C6 respectively; and three non-common ports of the three-way power splitter/combiner B3 are connected to a static contact end of the SPDT RF switch C1 or C2, a static contact end of the switch C3 or C4, and a static contact end of the switch C5 or C6 respectively.
9) The two SPDT RF switches C1 and C2 connected to the SPTT RF switch A'1 totally have four static contact ends, one of the four static contact ends is connected to a static contact end of the switch A1, the other three static contact ends are connected to a non-common port of the three-way power splitters/combiners B1, B2, and B3 respectively; likewise, the two SPDT RF switches C3 and C4 connected to the SPTT RF switch A'2 totally have four static contact ends, one of the four static contact ends is connected to a static contact end of the switch A2, and the other three static contact ends are connected to a non-common port of the three-way power splitters/combiners B1, B2, and B3 respectively; and the two SPDT RF switches C5 and C6 connected to the SPTT RF switch A'3 totally have four static contact ends, one of the four static contact ends is connected to a static contact end of the switch A3, and the other three static contact ends are connected to a non-common port of the three-way power splitters/combiners B1, B2, and B3 respectively.

An application of the mobile communication BS RF signal sector switching system in mobile communication BS RF signal sector switching is provided.

In a mobile communication BS RF signal sector switching system of the present invention, deployment of a carrier frequency load in a wireless communication BS can be controlled through RF switches, thereby achieving an effect that BS RF interfaces 1, 2, and 3 can transmit and receive signals through any one, two, or three BS antennas of BS antennas 1, 2, and 3.

Beneficial effects of the mobile communication BS RF signal sector switching system of the present invention are as follows.
1. With original BS antenna configurations unchanged, a carrier frequency of an idle sector is deployed to a sector with heavy traffic in the same BS, thereby achieving best use of a carrier frequency resource, increasing a channel utilization rate of an idle sector, reducing cases of channel congestion of a sector of heavy traffic, and improving quality of service of a mobile communication BS.
2. A carrier frequency resource in a mobile communication BS is prevented from being redundantly configured, great waste of a carrier frequency resource occurring in an existing BS system is reduced, energy is saved, and advantages of energy conservation and environmental protection are achieved.

### BRIEF DESCRIPTION OF THE DRAWINGS

FIG. 1 is a schematic view of existing mobile communication BS RF signal sectors;
FIG. 2 is a schematic view of a mobile communication BS RF signal sector switching system according to the present invention; and

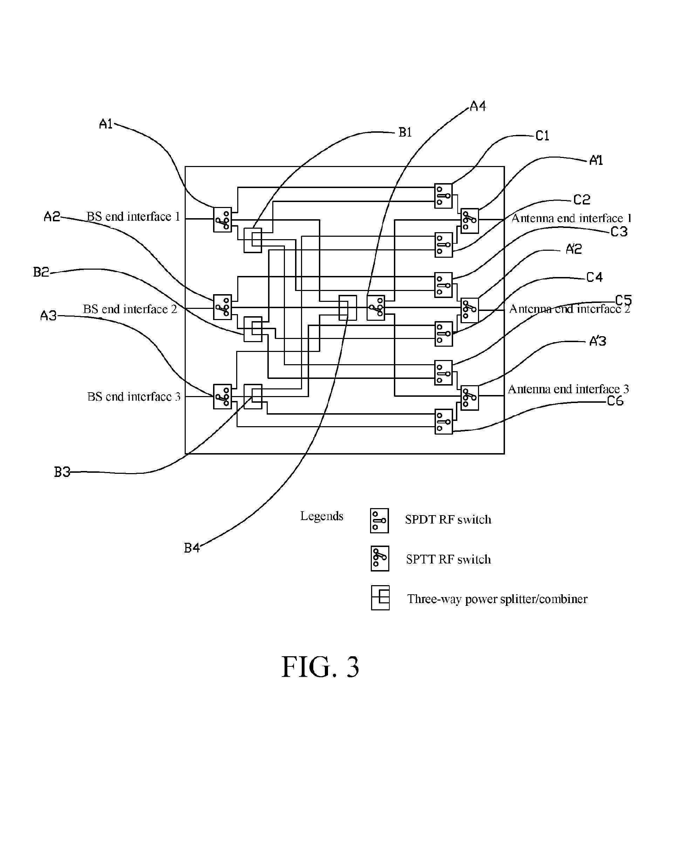

FIG. 3 is a circuit diagram of a switching circuit of a mobile communication BS RF signal sector switching system according to the present invention, in which A'1, A'2, and A'3 are three SPTT RF switches connected to antenna end interfaces 1, 2, and 3; A1, A2, and A3 are three SPTT RF switches connected to BS end interfaces 1, 2, and 3; C1, C2, C3, C4, C5, and C6 are SPDT RF switches on an antenna end interface side and connected to the switches A'1, A'2, and A'3; each of the switches A1, A2, and A3 is connected to a three-way power splitter/combiner, and the three-way power splitters/combiners are in sequence named as three-way power splitters/combiners B1, B2, and B3; B4 is a three-way power splitter/combiner in the center of the switching circuit; and A4 is an SPTT RF switch also in the center of the switching circuit.

### DETAILED DESCRIPTION OF THE INVENTION

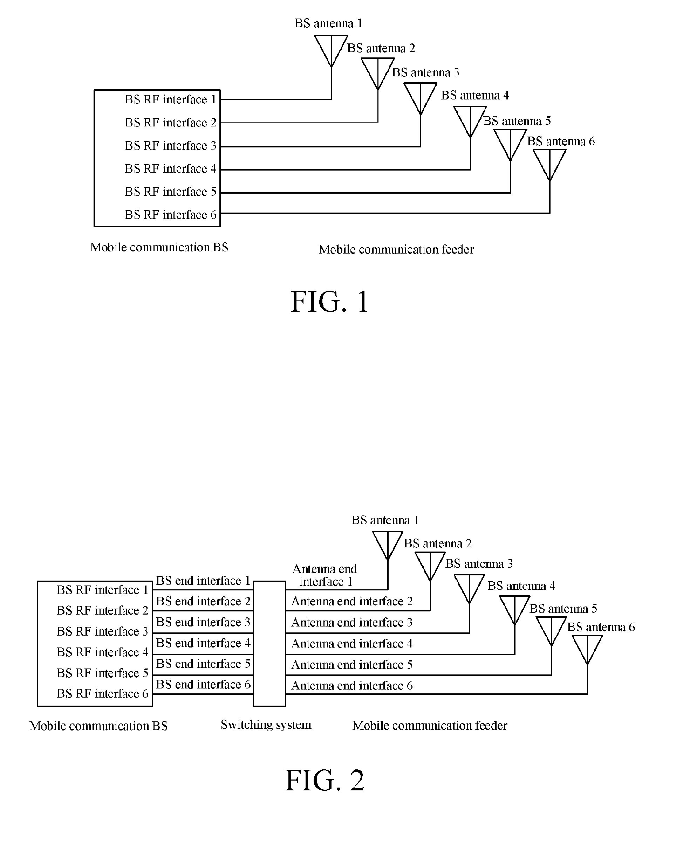

FIG. 1 illustrates an existing mobile communication BS RF signal sector coverage system, and RF cables are used to connect BS RF interfaces to BS antennas one by one respectively. That is to say, when a system is connected and mounted, a BS RF interface 1 can only transmit and receive signals through a BS antenna 1, a BS RF interface 2 can only transmit and receive signals through a BS antenna 2, and so on. In this way, the number of users in each BS antenna coverage area may change, so that the number of clients in some coverage area may be usually very small, and a carrier frequency resource becomes idle; however, the number of users in some coverage area is very large, and a carrier frequency resource is fully loaded or overloaded. Therefore, the existing mobile communication BS RF signal sector coverage system cannot make efficient use of the carrier frequency resource, and greatly wastes the carrier frequency resource.

As can be seen from FIG. 2, after a mobile communication BS RF signal sector switching system of the present invention is used, by internal switching in a switching system, BS RF interfaces 1, 2, and 3 can be connected to BS antennas 1, 2, and 3 in any form, and BS RF interfaces 4, 5, and 6 can be connected to BS antennas 4, 5, and 6 in any form. For example, the BS RF interface 1, 2, or 3 can transmit and receive signals through any one, two, or three BS antennas of the BS antennas 1, 2, and 3, and the BS RF interface 4, 5, or 6 can transmit and receive signals through any one, two, or three BS antennas of the BS antennas 4, 5, and 6. In this way, the carrier frequency resource is well used, and energy is saved.

FIG. 3 is a circuit diagram of a switching circuit of a mobile communication BS RF signal sector switching system according to the present invention. It can be seen from the drawing that:
1) Dynamic contact levers of SPTT RF switches A'1, A'2, and A'3 are connected to the antenna end interfaces 1, 2, and 3 respectively.
2) Dynamic contact levers of SPTT RF switches A1, A2, and A3 are connected to the BS end interfaces 1, 2, and 3 respectively.
3) A dynamic contact lever of an SPDT RF switch C1 is connected to an upper static contact end A'11 of the SPTT RF switch A'1, and a dynamic contact lever of an SPDT RF switch C2 is connected to a lower static contact end A'13 of the SPTT RF switch A'1. Likewise, a dynamic contact lever of an SPDT RF switch C3 is connected to an upper static contact end A'21 of the SPTT RF switch A'2, and a dynamic contact lever of an SPDT RF switch C4 is connected to a lower static contact end A'23 of the SPTT RF switch A'2; a dynamic contact lever of an SPDT RF switch C5 is connected to an upper static contact end A'31 of the SPTT RF switch A'3, and a dynamic contact lever of an SPDT RF switch C6 is connected to a lower static contact end A'33 of the SPTT RF switch A'3.
4) An upper static contact end A41 of an SPTT RF switch A4 is connected to a middle static contact end A'12 of the SPTT RF switch A'1, a middle static contact end A42 of the SPTT RF switch A4 is connected to a middle static contact end A'22 of the SPTT RF switch A'2, and a lower static contact end A43 of the SPTT RF switch A4 is connected to a middle static contact end A'32 of the SPTT RF switch A'3; and a dynamic contact lever of the SPTT RF switch A4 is connected to a common port of a three-way power splitter/combiner B4.
5) An upper non-common port B41 of the three-way power splitter/combiner B4 is connected to a middle static contact end A12 of the SPTT RF switch A1, a middle non-common port B42 of the three-way power splitter/combiner B4 is connected to a middle static contact end A22 of the SPTT RF switch A2, and a lower non-common port B43 of the three-way power splitter/combiner B4 is connected to an upper static contact end A31 of the SPTT RF switch A3.
6) A lower static contact end A13 of the SPTT RF switch A1 is connected to a common port of the three-way power splitter/combiner B1, a lower static contact end A23 of the SPTT RF switch A2 is connected to a common port of the three-way power splitter/combiner B2, and a middle static contact end A32 of the SPTT RF switch A3 is connected to a common port of the three-way power splitter/combiner B3.
7) An upper static contact end A1 1 of the SPTT RF switch A1 is connected to an upper static contact end C11 of the SPDT RF switch C1. Likewise, an upper static contact end A21 of the SPTT RF switch A2 is connected to an upper static contact end C31 of the SPDT RF switch C3, and a lower static contact end A33 of the SPTT RF switch A3 is connected to a lower static contact end C62 of the SPDT RF switch C6.
8) An upper non-common port B11 of the three-way power splitter/combiner B1 is connected to a lower static contact end C12 of the SPDT RF switch C1, a middle non-common port B12 of the B1 is connected to a lower static contact end C32 of the SPDT RF switch C3, and a lower non-common port B13 of the B1 is connected to an upper static contact end C51 of the SPDT RF switch C5. Likewise, an upper non-common port B21 of the three-way power splitter/combiner B2 is connected to a lower static contact end C22 of the SPDT RF switch C2, a middle non-common port B22 of the B2 is connected to a lower static contact end C42 of the SPDT RF switch C4, and a lower non-common port B23 of the B2 is connected to a lower static contact end C52 of the SPDT RF switch C5; an upper non-common port B31 of the three-way power splitter/combiner B3 is connected to an upper static contact end C21 of the SPDT RF switch C2, a middle non-common port B32 of the B3 is connected to an upper static contact end C41 of the SPDT RF switch C4, and a lower non-common port B33 of the B3 is connected to an upper static contact end C61 of the SPDT RF switch C6.
9) The upper static contact end C11 of the SPDT RF switch C1 is connected to the upper static contact end A11 of the SPTT RF switch A1, the lower static contact end C12 of the C1 is connected to the upper non-common port B11 of the three-way power splitter/combiner B1, the upper static contact end C21 of the SPDT RF switch C2 is connected to the upper non-common port B31 of the three-way power splitter/combiner B3, and the lower static contact end C22 of the C2 is connected to the upper non-common port B21 of the three-way power splitter/combiner B2; the upper static contact end C31 of the SPDT RF switch C3 is connected to the upper static contact end A21 of the SPTT RF switch A2, and the lower static contact end C32 of the C3 is connected to the middle non-common port B12 of the three-way power splitter/combiner B1; the upper static contact end C41 of the SPDT RF switch C4 is connected to the middle non-common port B22 of the three-way power splitter/combiner B2, and the lower static contact end C42 of the C4 is connected to the middle non-common port B22 of the three-way power splitter/combiner B2; the upper static contact end C51 of the SPDT RF switch C5 is connected to the lower non-common port B13 of the three-way power splitter/combiner B1, and the lower static contact end C52 of the C5 is connected to the lower non-common port B23 of the three-way power splitter/combiner B2; and the upper static contact end C61 of the SPDT RF switch C6 is connected to the lower non-common port B33 of the three-way power splitter/combiner B3, and the lower static contact end C62 of the C6 is connected to the lower static contact end A33 of the SPTT RF switch A3.

The three static contact ends of an SPTT RF switch are called the upper, the middle, and the lower in sequence according to positions shown in the drawing, the two static contact ends of an SPDT RF switch are called the upper and the lower in sequence according to positions shown in the drawing, and it should be understood that the naming is for convenience of description, and in actual applications circuit connection of static contact ends of an RF switch is not limited by position.

Descriptions are provided in detail by taking the antenna end interface 1 as an example.
I. When the dynamic contact lever of the switch A'1 is up, and the switch A'1 is connected to the switch C1, if the dynamic contact levers of the switch C1 and the switch A1 are both up, a signal of the BS antenna 1 is transmitted to the BS end interface 1; if the dynamic contact levers of the switch C1 and the switch A1 are both down, the signal of the BS antenna 1 is transmitted to the BS end interface 1 through the three-way power splitter/combiner B1.
II. When the dynamic contact lever of the switch A'1 is in the middle, and the dynamic contact lever of the switch A4 is up, the switch A'1 is connected to the switch A4, and in this case the signal of the BS antenna 1 is transmitted to the BS end interfaces 1, 2, and 3 respectively through the three-way power splitter/combiner B4, and definitely at the moment the dynamic contact levers of the switches A1, A2, and A3 have to be in corresponding connection positions.
III. When the dynamic contact lever of the switch A'1 is down, the switch A'1 is connected to the switch C2, and the dynamic contact lever of the switch C2 is up or down, the signal of the BS antenna 1 is transmitted to the BS end interface 2 or 3 through the three-way power splitter/combiner B2 or B3 respectively.

Likewise, for the antenna end interface 2:
I. When the dynamic contact lever of the switch A'2 is up, and the switch A'2 is connected to the switch C3, if the dynamic contact levers of the switch C3 and the switch A2 are both up, a signal of the BS antenna 2 is transmitted to the BS end interface 2; if the dynamic contact lever of the switch C3 is down, the signal of the BS antenna 2 is transmitted to the BS end interface 1 through the three-way power splitter/combiner B1.
II. When the dynamic contact lever of the switch A'2 is in the middle, and the dynamic contact lever of the switch A4 is in the middle, the switch A'2 is connected to the switch A4, and in this case the signal of the BS antenna 2 is transmitted to the BS end interfaces 1, 2, and 3 respectively through the three-way power splitter/combiner B4, and definitely at the moment the dynamic contact levers of the switches A1, A2, and A3 have to be in corresponding connection positions.
III. When the dynamic contact lever of the switch A'2 is down, the switch A'2 is connected to the switch C4, and the dynamic contact lever of the switch C4 is up or down, the signal of the BS antenna 2 is transmitted to the BS end interface 2 or 3 through the three-way power splitter/combiner B2 or B3 respectively.

Likewise, for the antenna end interface 3:
I. When the dynamic contact lever of the switch A'3 is up, the switch A'3 is connected to the switch C5, and the dynamic contact lever of the switch C5 is up or down, a signal of the BS antenna 3 is transmitted to the BS end interface 1 or 2 through the three-way power splitter/combiner B1 or B2 respectively.
II. When the dynamic contact lever of the switch A'3 is in the middle, and the dynamic contact lever of the switch A4 is in the middle, the switch A'3 is connected to the switch A4, and in this case the signal of the BS antenna 3 is transmitted to the BS end interfaces 1, 2, and 3 respectively through the three-way power splitter/combiner B4, and definitely at the moment the dynamic contact levers of the switches A1, A2, and A3 have to be in corresponding connection positions.
III. When the dynamic contact lever of the switch A'3 is down, and the switch A'3 is connected to the switch C6, if the dynamic contact lever of the switch C6 is up, and the dynamic contact lever of the switch A3 is in the middle, the signal of the BS antenna 3 is transmitted to the BS end interface 3 through the three-way power splitter/combiner B3; if the dynamic contact levers of the switch C6 and the switch A3 are both down, the signal of the BS antenna 3 is directly transmitted to the BS end interface 3.

The aforementioned circuit connection is only an embodiment of the switching circuit of the mobile communication BS RF signal sector switching system of the present invention, and improvements made to the switching circuit in the switching system of the present invention without violating the circuit connection principle of the present invention are within the protection scope of the present invention.

As stated above, by acquiring different combinations of on/off states of RF switches, any BS end interface in a switching system can be electrically connected to one, two, or three antenna end interfaces at the same time, and any antenna end interface can be electrically connected to one, two, or three BS end interfaces at the same time. In this way, signals from different BS antennas can be transmitted to different BS RF interfaces, and meanwhile the BS RF interfaces can also receive signals from the different BS antennas, thereby achieving effects of adjusting carrier frequency distribution in a BS and effectively increasing comprehensive efficiency of wireless communication. On/off states of RF switches are controlled by a switch control panel connected to the RF switches, and the on/off states of all of the RF switches can be operated through the switch control panel automatically or manually.

## Claims

1. A mobile communication base station (BS) radio frequency (RF) signal sector switching system, wherein the switching system is disposed between BS RF interfaces of a wireless communication BS and BS antennas, the switching system comprises BS end interfaces connected to the three BS RF interfaces in the wireless communication BS, antenna end interfaces connected to the three BS antennas, and a switching circuit between the BS end interfaces and the antenna end interfaces, enabling any BS end interface to be electrically connected to one, two, or three antenna end interfaces at the same time, and enabling any antenna end interface to be electrically connected to one, two, or three BS end interfaces at the same time.

2. The mobile communication BS RF signal sector switching system according to claim 1, wherein the switching circuit of the switching system comprises RF switches and three-way power splitters/combiners.

3. The mobile communication BS RF signal sector switching system according to claim 1, wherein the switching circuit of the switching system comprises seven single-pole triple-throw (SPTT) RF switches, six single-pole double-throw (SPDT) RF switches, and four three-way power splitters/combiners, carrier frequency distribution in the wireless communication BS is controlled through the RF switches, and connections are as follows:
1) dynamic contact levers of SPTT RF switches A'1, A'2, and A'3 are connected to antenna end interfaces 1, 2, and 3 respectively;
2) dynamic contact levers of SPTT RF switches A1, A2, and A3 are connected to BS end interfaces 1, 2, and 3 respectively;
3) a dynamic contact lever of an SPDT RF switch C1 is connected to a static contact end of the SPTT RF switch A'1, and a dynamic contact lever of an SPDT RF switch C2 is connected to a static contact end of the SPTT RF switch A'1; likewise, a dynamic contact lever of an SPDT RF switch C3 is connected to a static contact end of the SPTT RF switch A'2, and a dynamic contact lever of an SPDT RF switch C4 is connected to a static contact end of the SPTT RF switch A'2; and a dynamic contact lever of an SPDT RF switch C5 is connected to a static contact end of the SPTT RF switch A'3, and a dynamic contact lever of an SPDT RF switch C6 is connected to a static contact end of the SPTT RF switch A'3;
4) three static contact ends of an SPTT RF switch A4 are connected to static contact ends of the SPTT RF switches A'1, A'2, and A'3 respectively; and a dynamic contact lever of the SPTT RF switch A4 is connected to a common port of a three-way power splitter/combiner B4;
5) three non-common ports of the three-way power splitter/combiner B4 are connected to static contact ends of the SPTT RF switches A1, A2, and A3 respectively;
6) another static contact ends of the SPTT RF switches A1, A2, and A3 are connected to common ports of three-way power splitters/combiners B1, B2, and B3 respectively;
7) a last static contact end of the SPTT RF switch A1 is connected to a static contact end of the SPDT RF switch C1 or the SPDT RF switch C2; likewise, a last static contact end of the SPTT RF switch A2 is connected to a static contact end of the SPDT RF switch C3 or the SPDT RF switch C4; and a last static contact end of the SPTT RF switch A3 is connected to a static contact end of the SPDT RF switch C5 or the SPDT RF switch C6;
8) three non-common ports of the three-way power splitter/combiner B1 are connected to a static contact end of the SPDT RF switch C1 or C2, a static contact end of the switch C3 or C4, and a static contact end of the switch C5 or C6 respectively; likewise, three non-common ports of the three-way power splitter/combiner B2 are connected to a static contact end of the SPDT RF switch C1 or C2, a static contact end of the switch C3 or C4, and a static contact end of the switch C5 or C6 respectively; and three non-common ports of the three-way power splitter/combiner B3 are connected to a static contact end of the SPDT RF switch C1 or C2, a static contact end of the switch C3 or C4, and a static contact end of the switch C5 or C6 respectively; and
9) the two SPDT RF switches C1 and C2 connected to the SPTT RF switch A'1 totally have four static contact ends, one of the four static contact ends is connected to a static contact end of the switch A,1 the other three static contact ends are connected to a non-common port of the three-way power splitters/combiners B1, B2, and B3 respectively; likewise, the two SPDT RF switches C3 and C4 connected to the SPTT RF switch A'2 totally have four static contact ends, one of the four static contact ends is connected to a static contact end of the switch A2, and the other three static contact ends are connected to a non-common port of the three-way power splitters/combiners B1, B2, and B3 respectively; and the two SPDT RF switches C5 and C6 connected to the SPTT RF switch A'3 totally have four static contact ends, one of the four static contact ends is connected to a static contact end of the switch A3, and the other three static contact ends are connected to a non-common port of the three-way power splitters/combiners B1, B2, and B3 respectively.

4. The mobile communication BS RF signal sector switching system according to claim 3, wherein connection relationships of internal components of the switching circuit of the switching system are as follows:
1) the dynamic contact levers of the SPTT RF switches A'1, A'2, and A'3 are connected to the antenna end interfaces 1, 2, and 3 respectively;
2) the dynamic contact levers of the SPTT RF switches A1, A2, and A3 are connected to the BS end interfaces 1, 2, and 3 respectively;
3) the dynamic contact lever of the SPDT RF switch C1 is connected to an upper static contact end A'11 of the SPTT RF switch A'1, and the dynamic contact lever of the SPDT RF switch C2 is connected to a lower static contact end A'13 of the SPTT RF switch A'1; likewise, the dynamic contact lever of the SPDT RF switch C3 is connected to an upper static contact end A'21 of the SPTT RF switch A'2, and the dynamic contact lever of the SPDT RF switch C4 is connected to a lower static contact end A'23 of the SPTT RF switch A'2; and the dynamic contact lever of the SPDT RF switch C5 is connected to an upper static contact end A'31 of the SPTT RF switch A'3, and the dynamic contact lever of the SPDT RF switch C6 is connected to a lower static contact end A'33 of the SPTT RF switch A'3;
4) an upper static contact end A41 of the SPTT RF switch A4 is connected to a middle static contact end A'12 of the SPTT RF switch A'1, a middle static contact end A42 of the SPTT RF switch A4 is connected to a middle static contact end A'22 of the SPTT RF switch A'2, and a lower static contact end A43 of the SPTT RF switch A4 is connected to a middle static contact end A'32 of the SPTT RF switch A'3; and the dynamic contact lever of the SPTT RF switch A4 is connected to the common port of the three-way power splitter/combiner B4;
5) an upper non-common port B41 of the three-way power splitter/combiner B4 is connected to a middle static contact end A12 of the SPTT RF switch A1, a middle non-common port B42 of the three-way power splitter/combiner B4 is connected to a middle static contact end A22 of the SPTT RF switch A2, and a lower non-common port B43 of the three-way power splitter/combiner B4 is connected to an upper static contact end A31 of the SPTT RF switch A3;
6) a lower static contact end A13 of the SPTT RF switch A1 is connected to the common port of the three-way power splitter/combiner B1, a lower static contact end A23 of the SPTT RF switch A2 is connected to the common port of the three-way power splitter/combiner B2, and a middle static contact end A32 of the SPTT RF switch A3 is connected to the common port of the three-way power splitter/combiner B3;
7) an upper static contact end A11 of the SPTT RF switch A1 is connected to an upper static contact end C11 of the SPDT RF switch C1; likewise, an upper static contact end A21 of the SPTT RF switch A2 is connected to an upper static contact end C31 of the SPDT RF switch C3, and a lower static contact end A33 of the SPTT RF switch A3 is connected to a lower static contact end C62 of the SPDT RF switch C6;
8) an upper non-common port B11 of the three-way power splitter/combiner B1 is connected to a lower static contact end C12 of the SPDT RF switch C1, a middle non-common port B12 of the B1 is connected to a lower static contact end C32 of the SPDT RF switch C3, and a lower non-common port B13 of the B1 is connected to an upper static contact end C51 of the SPDT RF switch C5; likewise, an upper non-common port B21 of the three-way power splitter/combiner B2 is connected to a lower static contact end C22 of the SPDT RF switch C2, a middle non-common port B22 of the B2 is connected to a lower static contact end C42 of the SPDT RF switch C4, and a lower non-common port B23 of the B2 is connected to a lower static contact end C52 of the SPDT RF switch C5; an upper non-common port B31 of the three-way power splitter/combiner B3 is connected to an upper static contact end C21 of the SPDT RF switch C2, a middle non-common port B32 of the B3 is connected to an upper static contact end C41 of the SPDT RF switch C4, and a lower non-common port B33 of the B3 is connected to an upper static contact end C61 of the SPDT RF switch C6; and
9) the upper static contact end C11 of the SPDT RF switch C1 is connected to the upper static contact end A11 of the SPTT RF switch A1, the lower static contact end C12 of the C1 is connected to the upper non-common port B11 of the three-way power splitter/combiner B1, the upper static contact end C21 of the SPDT RF switch C2 is connected to the upper non-common port B31 of the three-way power splitter/combiner B3, and the lower static contact end C22 of the C2 is connected to the upper non-common port B21 of the three-way power splitter/combiner B2; the upper static contact end C31 of the SPDT RF switch C3 is connected to the upper static contact end A21 of the SPTT RF switch A2, and the lower static contact end C32 of the C3 is connected to the middle non-common port B12 of the three-way power splitter/combiner B1; the upper static contact end C41 of the SPDT RF switch C4 is connected to the middle non-common port B22 of the three-way power splitter/combiner B2, and the lower static contact end C42 of the C4 is connected to the middle non-common port B22 of the three-way power splitter/combiner B2; the upper static contact end C51 of the SPDT RF switch C5 is connected to the lower non-common port B13 of the three-way power splitter/combiner B1, and the lower static contact end C52 of the C5 is connected to the lower non-common port B23 of the three-way power splitter/combiner B2; and the upper static contact end C61 of the SPDT RF switch C6 is connected to the lower non-common port B33 of the three-way power splitter/combiner B3, and the lower static contact end C62 of the C6 is connected to the lower static contact end A33 of the SPTT RF switch A3.

5. An application of the mobile communication base station (BS) radio frequency (RF) signal sector switching system according to claim 1 in mobile communication BS RF signal sector switching.
